# EUROPEAN PATENT APPLICATION

(11) **EP 1 246 483 A2**
(43) Date of publication of application: **02.10.2002**
(21) Application number: 02250353.6
(22) Date of filing: 18.01.2002
(51) Int. Cl.: H04Q 7/22, G08B 3/10, H04M 1/725

(54) **Message communication device**

(30) Priority: 30.03.2001 JP 2001099839
(71) Applicant: Hitachi Kokusai Electric Inc., Tokyo 164-8511 (JP)
(72) Inventor: Abiko, Hajime, c/o Hitachi Kokusai Electric Inc., Nakano-ku 164-8511 (JP); Yoneyama, Tokuji, Hitachi Kokusai Electric Inc., Nakano-ku 164-8511 (JP)
(74) Representative: Nicholls, Michael John

(57) **Abstract**

A message communication device, typically a mobile telephone, includes menu information creating means that creates menu information including received message sender identification information listed in a prescribed order for display to the user and accept means that accepts user designation of items among the sender identification information to be subjected to prescribed processing.

## Description

This invention relates to message communication device such as a mobile telephone that receives messages, particularly to a message communication device that facilitates user utilization of information identifying the senders of received messages.

Mobile telephones and the like have become ubiquitous in recent years. Mobile telephones are commonly used not only for telephone calls but also for sending and receiving mail messages. In the conventional mobile telephone, all received mail messages are stored in a folder created beforehand (the received message folder). The mobile telephone user can by a manual input read the numerous mail messages stored in the received mail message folder one by one or search for a required mail message.

With the conventional mobile telephone, however, a user who wishes, for example, to create a list of all received mail messages from a particular sender must search through numerous messages one by one by means of a manual input operation. Some received messages required are therefore likely to be overlooked and many operations are needed to find the messages. Moreover, with the conventional mobile telephone, a user who desires to record the address etc. of a person who sent a received mail message (the sender) in the mobile telephone is required to do so by a troublesome manual operation.

The present invention was accomplished to overcome these problems of the prior art and has as its object to provide a message communication device that facilitates user utilization of information identifying the senders of received messages.

In order to achieve this object, the present invention provides a message communication device whose message receiving system configuration includes menu information creating means that creates menu information including information identifying senders of received messages (received message sender identification information).

Since menu information including information identifying received message senders is therefore automatically created, the information identifying received message senders is easy for the user to utilize.

The messages may be of various kinds. For example, use can be made of mail messages or ordinary call messages in a mobile telephone or the like.

The information constituting the messages can also be of various kinds, including text information composed of characters, numerals, symbols and so forth, voice information, graphic information and combinations of these.

The received messages used to create the menu information including information identifying senders may include all received messages or only received messages that satisfy prescribed conditions. Taking mail messages as a concrete example, it is possible to use messages received and stored in memory. Specifically, regarding call messages in a mobile telephone or the like, for example, it is possible to use those among received calls that the user accepted (by going off-hook).

Various kinds of information can also be used as information identifying senders. Such information can include, for instance, address information, information regarding telephone numbers of mobile telephones and the like, sender name information, and so on.

The menu information including information identifying senders of received messages can, for example, include only information identifying received message senders or can include information identifying other persons.

The menu information created by the menu information creating means can be menu information relating exclusively to received message senders or menu information including such information in common with other information like that in the telephone directory of a mobile telephone or the like.

The menu information creating means can create the menu information at any of various times. For example, it can create the menu information when the users carries out a prescribed operation or when a new message is received.

In the message communication device according to the present invention, the menu information creating means creates menu information listing the sender identification information in a prescribed order.

The listing of the sender identification information in a prescribed order in the menu information improves ease-of-use because it permits the user to readily find required sender information.

The prescribe order can be any of various orders. It can, for example, be alphabetical order, date order, order of number of messages received from the same sender, or the like. In the case of alphabetical order, it can be in ascending order (A, B, C ...) or descending order (Z, Y, X ...); in the case of date order, it can be from newest to oldest or vice versa; and in the case of message number order, it can be most to least or vice versa.

In the message communication device according the present invention, display means displays the menu information created by the menu information creating means for the user to view, accept means accepts user designation of sender identification information among the displayed menu information, and processing means executes prescribed processing related to the accepted sender identification information.

The user can therefore designate sender identification information from among the menu information created by the menu information creating means so as to subject the designated sender identification information to prescribed processing. Since the operations for designating sender identification information and executing prescribed processing are therefore made simple for the user, ease-of-use is enhanced.

Any of various methods can be used for accepting designated sender identification information among the displayed menu information. To give an example, a method can be adopted in which a cursor is displayed in the menu information and sender identification information corresponding to a position to which the user move the cursor is accepted.

The prescribed processing can be any of various kinds. Examples include processing for display of message titles and the like, processing for saving received messages, processing for deleting received messages, processing for setting parties to receive broadcast messages, and processing for editing or deleting the sender identification information per se. As regards processing for displaying the titles etc. of received messages, batch processing of designated sender identification information can be achieved by a configuration that, for instance, collectively displays the titles and the like of all messages received from senders identified by the designated sender identification information.

The invention will be further described by way of example with reference to the accompanying drawings, in which:-
FIG. 1 is a diagram showing the configuration of a mobile telephone that is an embodiment of the present invention.
FIG. 2 is an exemplary sender table.
FIG. 3 is a flowchart showing an example of the sequence of processing steps used in a first embodiment of the present invention to acquire sender addresses from received messages and enter them in a sender table.
FIG. 4 is a diagram showing examples of screens displayed when selecting senders.
FIG. 5 shows an example of a sender table sorted by date.
FIG. 6 is a flowchart showing an example of the sequence of processing steps used in a second embodiment of the present invention to acquire sender addresses from received messages and enter them in a sender table sorted by date.
FIG. 7 is a diagram showing examples of screens displayed when selecting senders.
FIG. 8 is an example of a sender table sorted by mail volume.
FIG. 9 is a flowchart showing an example of the sequence of processing steps used in a third embodiment of the present invention to acquire sender addresses from received messages and enter them in a sender table sorted by mail volume.
FIG. 10 is a diagram showing examples of screens displayed when selecting senders.

Embodiments of the present invention will now be explained with reference to the drawings.

The embodiments set out in the following represent applications of the present invention to mobile telephones of a mobile telephone system or Personal Handy phone System (PHS), and to messages that are "mail messages."

A mobile telephone that is a first embodiment of the present invention will now be explained with reference to the drawings.

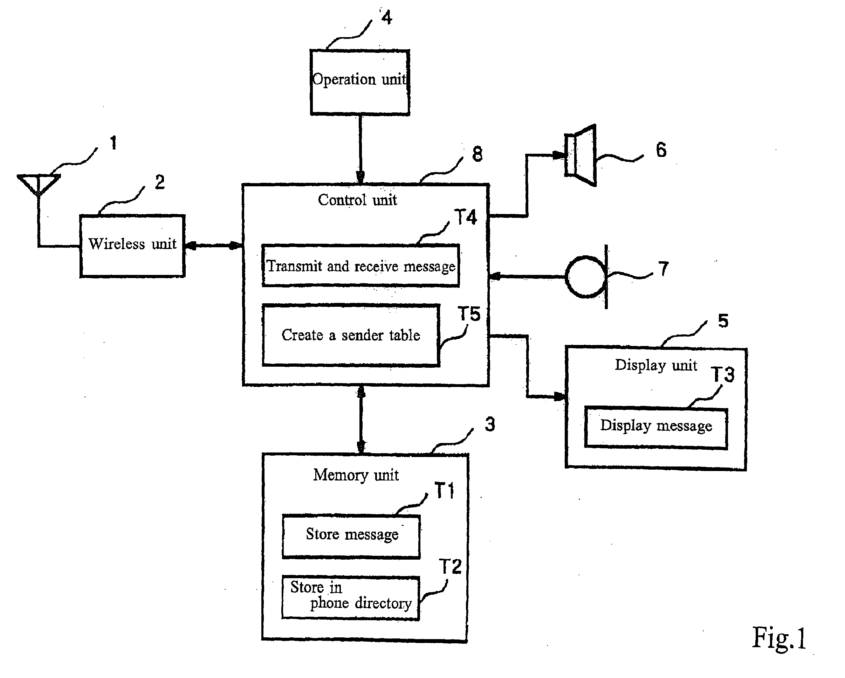

FIG. 1 schematically illustrates the hardware circuitry configuration of the mobile telephone of this embodiment. The mobile telephone is equipped with an antenna 1, wireless unit 2, memory unit 3, operation unit 4, display unit 5, speaker 6, microphone 7 and control unit 8.

The wireless unit 2 transmits and receives mail messages, call voice information and the like as wireless signals using the antenna 1.

The memory unit 3 consists of a memory for storing information. It stores a control program for controlling the processing operations of the control unit 8 described below and also conducts processing (T1) for storing mail messages received via the wireless unit 2 and processing (T2) for recording and storing information received from the operation unit 4 etc. described below as phone directory data associated with telephone numbers, names and the like.

The operation unit 4 is, for example, composed of keys or the like for inputting characters, numerals and so forth. It accepts input of message information and the like composed of characters, numerals and other symbols in response to an operation of the person using the mobile telephone of this embodiment (the user).

The display unit 5 has a screen for displaying characters, numerals and so forth. It conducts processing (T3) for displaying information such as the content of mail messages received from the wireless unit 2 on the screen and processing for displaying information such as the content of messages input through the operation unit 4.

The speaker 6 converts voice information and other electric signals received from the wireless unit 2 to sound that it reproduces for the user.

The microphone 7 converts the user's voice and other sounds to electrical signals for input.

The control unit 8 is equipped with a CPU (Central Processing Unit) and the like capable of loading the control program stored in the memory unit 3 into RAM (Random Access Memory) and carrying out various processing operations. It conducts processing (T4) associated with message reception, processing (T5) for creating a sender table including information identifying the senders of received messages, processing for reading information stored in the memory unit 3, and processing for controlling display in the display unit 5.

The so-configured mobile telephone of this embodiment acquires sender address information from received mail messages and effects processing for entering the addresses in a sender table.

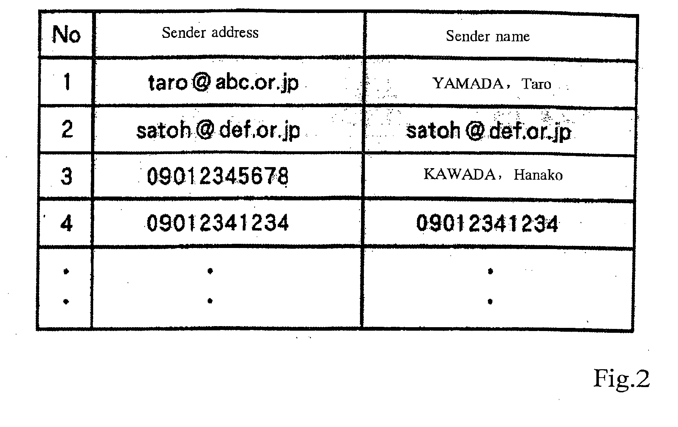

FIG. 2 shows an example of a sender table created by the mobile telephone of this embodiment. Each of the numbers (No) 1, 2, 3 ... in the sender table is associated with address information entered in a "Sender address" column and with registered name information or address information entered in a "Sender name" column. In the illustrated example, specific address information such as taro@abc.or.jp or 09012341234 is entered in the "Sender address" column and, in association therewith, registered name information such as "YAMADA, Taro" or address information such as "09012341234" is entered in the "Sender name" column.

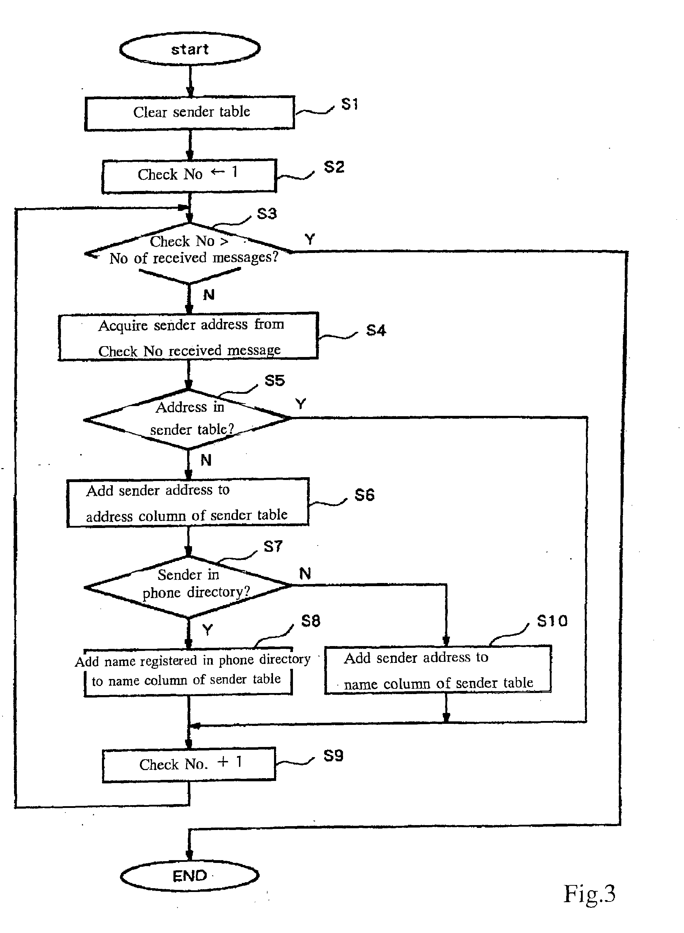

FIG. 3 is a flowchart showing an example of the sequence of processing steps used for acquiring sender address information from received messages and entering the information in the sender table. An example of the processing procedure will now be explained with reference to this drawing. The following explanation is made on the assumption that all mail messages received by the mobile telephone have been stored in the memory unit 3 and that each received message has been assigned a number such as 1, 2, 3....

In the mobile telephone, at the start of the processing, the sender table is cleared (step S1), the Check No is set to an initial value of 1 (step S2) and, until the Check No becomes larger than the total number of messages (step S3), sender identification information entry processing is executed as set out below (step S3 - step S9).

The sender identification information entry processing starts with extraction from the received message associated with the Check No of information regarding the address of the person (party) who sent the received message (step S4). It is then checked whether the extracted address information has already been recorded and is present in the sender table (step S5).

When it is found that the extracted address information is already present in the sender table, the Check No is incremented by 1 (step S9) and sender identification information entry processing is conducted with respect to the incremented Check No (step S3 - step S9).

On the other hand, when it is found that the extracted address information is not present in the sender table, the address information is recorded in (added to) the "Sender address" column of the sender table (step S6). It is then checked whether the address information is recorded and present in the phone directory (step 7).

When it is found that the extracted address information is present in the phone directory, information regarding the name (registered name) recorded in the phone directory in association with the address information is read and the registered name information is entered in the "Sender name" column of the sender table in association with the address information in the "Sender address" column of the sender table (step S8)

On the other hand, when it is found that the extracted address information is not present in the phone directory, the address information is entered in the "Sender name" column of the sender table in association with the address information in the "Sender address" column of the sender table (step S10).

When the processing for recording sender identification information in the sender table has been completed (step S8, step S9), the Check No is incremented by 1 (step S9) and sender identification information entry processing is conducted with respect to the incremented Check No (step S3 - step S9). The sender identification information entry processing is thus performed as many times as the total number of received messages.

In addition, the mobile telephone of this embodiment is configured so that if, at a time when received message titles and the like are displayed on the screen of the display unit 5, the user manipulates the operation unit 4 to perform a prescribed operation for displaying "Sender selection menu" information, the control unit 8 creates a sender table and displays information derived from the created sender table on the display unit 5 as "Sender selection menu" information.

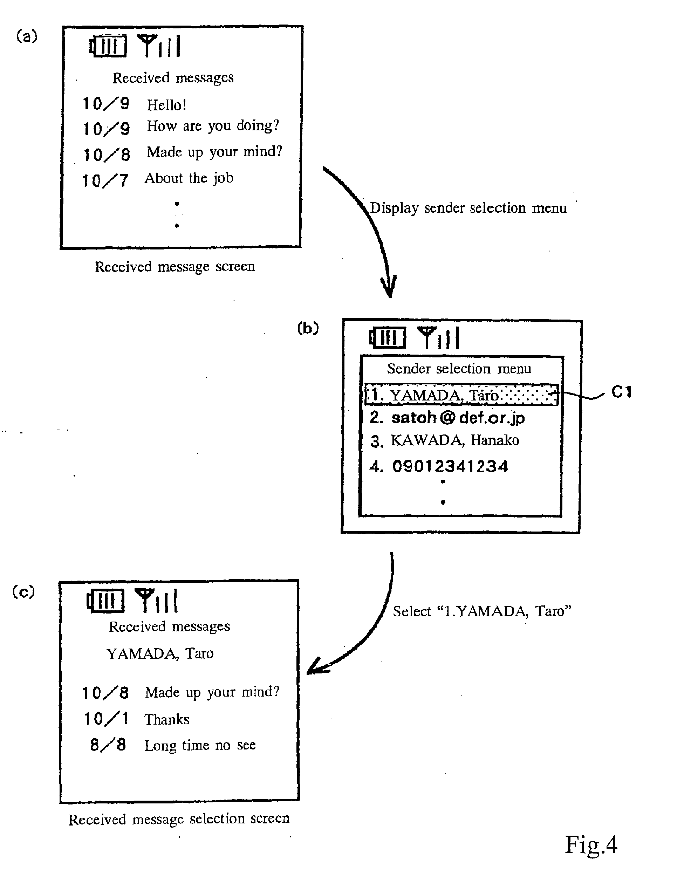

An example of the processing and the like for displaying the "Sender selection menu" information is shown in FIG. 4.

At (a) in the drawing is shown an example of a screen displayed to show received messages in order of date starting from the most recent (received message screen). The screen displays multiple lines, one for every received message, each composed of a set including the date the message was received (10/9 etc.) and the title (Hello etc.).

At a time when a received message screen is being displayed, if the user performs a prescribed operation for displaying "Sender selection menu" information, the control unit 8 executes the processing shown in FIG. 3 to create a sender table like that shown in FIG. 2 and displays a list of the information entered in the "Sender name" column of the created sender table on the screen of the display unit 5.

An example of a screen displaying such "Sender name" information in the form of "Sender selection menu" information (a sender selection menu screen) is shown at (b) in FIG. 4. This screen displays, for example, multiple items of "Sender name" information derived from the "Sender name" column of the sender table shown in FIG. 2 ("YAMADA, Taro," satoh@def.or.jp" etc.) in association with the numbers thereof (1, 2, 3 ...)

The sender selection menu screen shown at FIG. 4(b) also displays a cursor C1 for selecting, a single item of "Sender name" information from among the multiple items of "Sender name" information displayed. The cursor C1 moves in response to a prescribed operation for moving it performed by the user through the operation unit 4. The user can then designate (confirm selection of) the item of "Sender name" information selected by the cursor C1 by a prescribed designation operation input through the operation unit 4. In other words, the user can manipulate the operation unit 4 to select a desired item of "Sender name" information with the cursor C1 and can then manipulate the operation unit 4 to designate the selected "Sender name" information. In the example shown at (b) in the drawing, "1. YAMADA, Taro" is selected by the cursor C1.

In the mobile telephone of this embodiment, when an item of "Sender name" information is designated in the sender selection menu screen shown at (b) in the drawing, the control unit 8 conducts processing for displaying the title and the like of received messages associated with the designated item of "Sender name" information in the form of a list on the screen of the display unit 5.

The received messages associated with the designated item of "Sender name" information that are selected are those received messages among all received messages whose sender address information is the same as the address information entered in the "Sender address" column of the sender table sorted by date in association with the number of the designated item of "Sender name" information. As a concrete example, when the item of "Sender name" information "YAMADA, Taro" is designated, all received messages whose sender address information is the address information "taro@abc.or.jp" associated with the designated item of "Sender name" information are selected.

FIG. 4(c) shows an example of the screen (received message selection screen) displaying in the form of a list all received message titles etc. whose sender address information is the address information associated with the designated item of "Sender name" information in the case where the selected and designated item of "Sender name" information is "YAMADA, Taro" appearing on the sender selection menu screen shown in FIG. 4(b). The received message selection screen shown in FIG. 4(c) displays multiple lines, one for every received message considered to have been received from the person associated with the designated item of "Sender name" information "YAMADA, Taro," each composed of a set including the date the message was received (10/8 etc.) and the title (Made up your mind? etc.). The messages are listed in the received message selection screen in, for instance, order of date received (In Date) starting from the most recent.

As explained in the foregoing, the mobile telephone of this embodiment automatically creates a sender table and a sender selection menu, and enables the user to select and designate desired items of "Sender name" information from among the displayed sender selection menu information. The user can therefore display and read a list of received messages from the sender associated with the designated item of "Sender name" information.

The mobile telephone of this embodiment can be configured so that the user can designate a desired item of "Sender name" information merely by a single operation such as clicking or double clicking a key for designating the item of "Sender name" information in the sender selection menu screen. This eliminates the need to perform a complicated character input operation or other screen operations in order to designate a desired item of "Sender name" information.

Since the mobile telephone of this embodiment is configured to create a sender table only when the sender selection menu screen is displayed, the memory unit 3 can be efficiently utilized because it is not required to constantly store a sender table. It should be noted, however, that a mobile telephone can be configured differently from that of this embodiment so as to constantly store the created sender table in the memory unit 3 and rewrite the content of the stored sender table whenever required.

Although the mobile telephone of this embodiment was explained for the case where processing is conducted for selectively extracting and listing received messages from senders separately for each sender, a configuration can also be adopted which enables simple designation of "Sender name" information in a sender selection menu screen as in this embodiment to be also applied to any of various other processing operations.

Specifically, a configuration can be adopted that, for example, executes processing for saving or deleting received messages from senders associated with designated items of "Sender name" information as a separate batch operation for each sender.

Moreover, by adopting a configuration that enables items of "Sender name" information to be designated in the sender selection menu screen as transmission addresses in the case of, for example, making a broadcast transmission of messages of identical content to multiple parties, it becomes possible to designate parties not recorded in the phone directory as recipients of the transmission.

While in the present embodiment, the sender table is created as separate data from the phone directory data, the phone directory and the sender table can instead share common data. In this case, a sender table can be created to include, for instance, not only parties that the user recorded by, for example, manually inputting phone directory data but also all other parties from which messages were received.

In this embodiment, the registered name information and address information entered in the "Sender name" column of the sender table shown in FIG. 2 correspond to the sender identification information of the present invention.

In this embodiment, the "Sender name" and other information displayed on the sender selection menu screen shown in FIG. 4(b), for example, correspond to the menu information including information identifying received message senders of the present invention.

In this embodiment, the function of the control unit 8 that creates the menu information including information identifying senders constitutes the menu information creating means of the present invention.

In this embodiment, the function of the display unit 5 that displays the created menu information on a screen for user viewing constitutes the display means of the present invention.

In this embodiment, the function of the operation unit 4 that accepts user designation of sender identification information from among displayed menu information in response to a movement operation and a designation operation of the cursor C1 constitutes the accept means of the present invention.

In this embodiment, the function of the control unit 8 that executes prescribed processing including processing for batch display of received messages associated with accepted sender identification information constitutes the processing means of the present invention.

A mobile telephone that is a second embodiment of the present invention will now be explained with reference to the drawings.

The configuration and operation of the mobile telephone of the second embodiment are similar to the configuration and operation of the mobile telephone of the first embodiment except for the point that the mobile telephone of the second embodiment, in listing and displaying the information identifying senders of received messages for user viewing, gives priority to the senders whose messages were most recently received. In the following, therefore, only the points of difference in configuration and operation from the first embodiment will be explained in detail. For convenience of explanation, reference numerals identical to the reference numerals 1 to 8 assigned to the constituent elements of the mobile telephone shown in FIG. 1 will also be used to designate the corresponding constituent elements of the mobile telephone according to this second embodiment.

The mobile telephone of this embodiment acquires sender address information from received mail messages and effects processing for entering the addresses in a sender table sorted by date starting with the sender who sent the most recently received message.

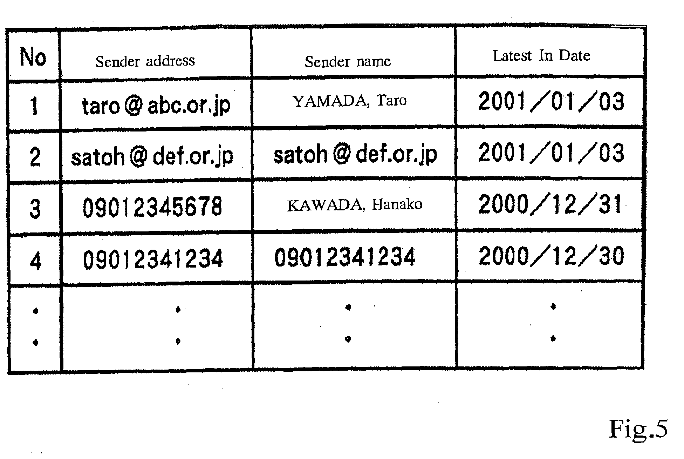

FIG. 5 shows an example of a sender table sorted by date created by the mobile telephone of this embodiment. Each of the numbers (No) 1, 2, 3 ... in the sender table sorted by date is associated with address information entered in a "Sender address" column, registered name information or address information entered in a "Sender name" column, and information indicating the date on which the most recent message was received (latest In Date) entered in a "Lastest In Date" column. In the illustrated example, specific address information such as taro@abc.or.jp or 09012341234 is entered in the "Sender address" column and, in association therewith, registered name information such as "YAMADA, Taro" or address information such as "09012341234" is entered in the "Sender name" column, and date information such as "2001/01/03" or "2000/12/30" is entered in the "Latest In Date" column.

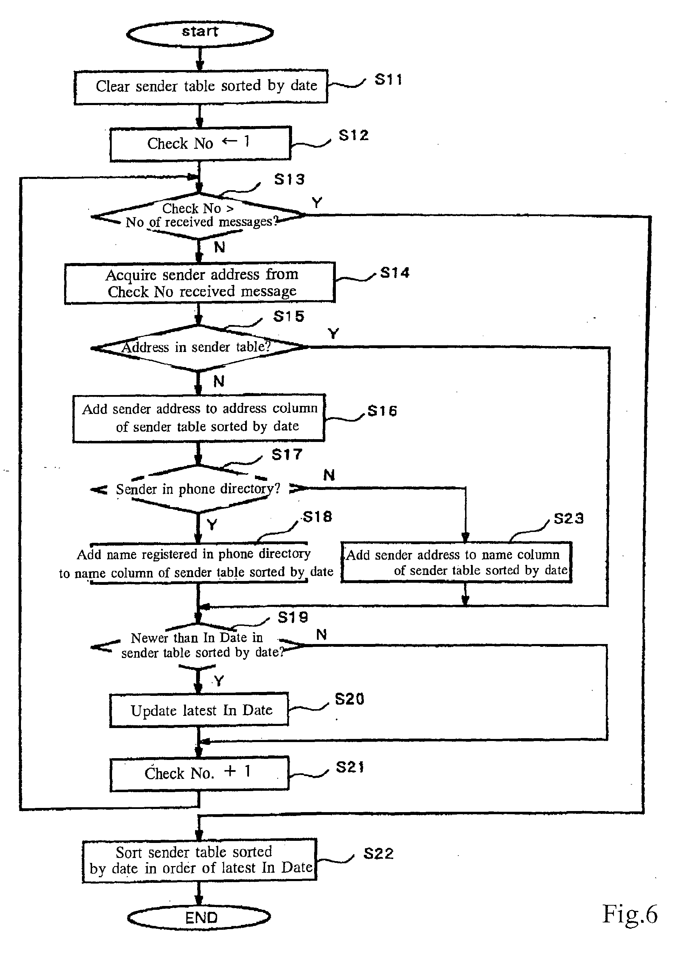

FIG. 6 is a flowchart showing an example of the sequence of processing steps used for acquiring sender address information from received messages and entering the information in the sender table sorted by date in the order of message In Date starting from the sender who sent the most recently received message. An example of the processing procedure will now be explained with reference to this drawing. The following explanation is made on the assumption that all mail messages received by the mobile telephone have been stored in the memory unit 3 and that each received message has been assigned a number such as 1, 2, 3.... It is also assumed that every received message is associated with the date the message was received by the mobile telephone of this embodiment (In Date).

In the mobile telephone, at the start of the processing, the sender table sorted by date is cleared (step S11), the Check No is set to an initial value of 1 (step S12) and, until the Check No becomes larger than the total number of messages (step S13), sender identification information entry processing is executed as set out below (step S13 - step S21).

The sender identification information entry processing starts with extraction from the received message associated with the Check No of information regarding the address of the person who sent the received message (step S14). It is then checked whether the extracted address information has already been recorded and is present in the sender table sorted by date (step S15).

When it is found that the extracted address information is already present in the sender table sorted by date, the In Date of the received message from which the address information was extracted is read, and a check is made as to whether the read In Date is newer than the latest In Date entered in the "Latest In Date" column of the sender table sorted by date in association with the address information (step S19). When it is found to be newer, the latest In Date entered in the "Latest In Date" column is updated by overwriting it with the read In Date (step S20). The Check No is then incremented by 1 (step S21) and sender identification information entry processing is conducted with respect to the incremented Check No (step S13 - step S21).

On the other hand, when it is found that the extracted address information is not present in the sender table sorted by date, the address information is recorded in (added to) the "Sender address" column of the sender table sorted by date (step S16). It is then checked whether the address information is recorded and present in the phone directory (step 17).

When it is found that the extracted address information is present in the phone directory, information regarding the name (registered name) recorded in the phone directory in association with the address information is read and the registered name information is entered in the "Sender name" column of the sender table sorted by date in association with the address information in the "Sender address" column of the sender table sorted by date (step S18).

On the other hand, when it is found that the extracted address information is not present in the phone directory, the address information is entered in the "Sender name" column of the sender table in association with the address information in the "Sender address" column of the sender table (step S23).

Next, the In Date of the received message from which the extracted address information was extracted is read an a check is made as to whether the In Date is newer than the In Date entered in the "Latest In Date" column of the sender table sorted by date in association with the address information (step S19). When it is found to be newer, the In Date entered in the "Latest In Date" column is overwritten with the read In Date (step S20).

When the processing for recording sender identification information in the sender table has been completed (step S20), the Check No is incremented by 1 (step S21) and sender identification information entry processing is conducted with respect to the incremented Check No (step S13 - step S21). The sender identification information entry processing is thus performed as many times as the total number of received messages.

When the sender identification information entry processing has been completed for all received messages, the sets of information each composed of a "Sender address," a ""Sender name" and a "Latest In Date" entered in the sender table sorted by date are resorted in the order of the In Dates stored in the "Latest In Date" column starting from the most recent (step S22). In this embodiment, therefore, the In Dates are stored starting with the sender who sent the most recently received message in the order of smaller to larger number (No) 1, 2, 3 ... in the sender table sorted by date. When two or more In Dates are the same, they can be listed in any desired order or be listed according to a separately established standard.

In addition, the mobile telephone of this embodiment is configured so that if, at a time when received message titles and the like are displayed on the screen of the display unit 5, the user manipulates the operation unit 4 to perform a prescribed operation for displaying "Sender selection by date menu" information, the control unit 8 creates a sender table sorted by date and displays information derived from the created sender table sorted by date on the display unit 5 as "Sender selection by date menu" information.

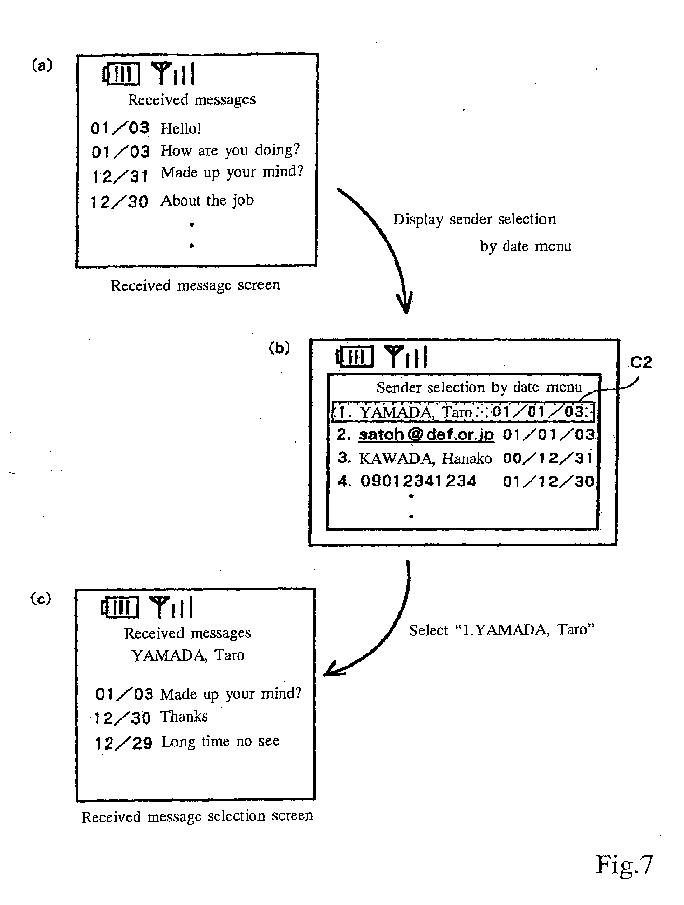

An example of the processing and the like for displaying the "Sender selection by date menu" information is shown in FIG. 7.

At (a) in the drawing is shown an example of a screen displayed to show received messages in order of date starting from the most recent (received message screen). The screen displays multiple lines, one for every received message, each composed of a set including the date the message was received (01/03 etc.) and the title (Hello etc.).

At a time when a received message screen is being displayed, if the user performs a prescribed operation for displaying "Sender selection by date menu" information, the control unit 8 executes the processing shown in FIG. 6 to create a sender table sorted by date like that shown in FIG. 5 and displays on the screen of the display unit 5 a list composed of sets of information entered in the "Sender name" column and information entered in the "Latest In Date" column of the created sender table sorted by date.

An example of a screen displaying such sets of "Sender name" information and "Latest date" information in the form of "Sender selection by date menu" information (a sender selection by date menu screen) is shown at (b) in FIG. 7. This screen displays, for example, multiple sets of "Sender name" information stored in the "Sender name" column ("YAMADA, Taro," "satoh@def.or.jp" etc.) and "Latest In Date" information ("01/01/03," 20001/01/03" etc.) in association with the numbers thereof (1, 2, 3 ...) of the sender table sorted by date shown in FIG. 5 arranged in order of "latest In Date" starting with the sender who sent the most recently received message.

The sender selection by date menu screen shown at FIG. 7(b) also displays a cursor C2 for selecting, for instance, a single item of "Sender name" information from among the multiple items of "Sender name" information displayed. The cursor C2 moves in response to a prescribed operation for moving it performed by the user through the operation unit 4. The user can then designate (confirm selection of) the item of "Sender name" information selected by the cursor C2 by a prescribed designation operation input through the operation unit 4. In other words, the user can manipulate the operation unit 4 to select a desired item of "Sender name" information with the cursor C2 and can then manipulate the operation unit 4 to designate the selected "Sender name" information. In the example shown at (b) in the drawing, "1. YAMADA, Taro" is selected by the cursor C2.

In the mobile telephone of this embodiment, when an item of "Sender name" information is designated in the sender selection by date menu screen shown at (b) in the drawing, the control unit 8 conducts processing for displaying the title and the like of received messages associated with the designated item of "Sender name" information in the form of a list on the screen of the display unit 5.

The received messages associated with the designated item of "Sender name" information that are selected are those received messages among all received messages whose sender address information is the same as the address information entered in the "Sender address" column of the sender table sorted by date in association with the number of the designated item of "Sender name" information. As a concrete example, when the item of "Sender name" information "YAMADA, Taro" is designated, all received messages whose sender address information is the address information "taro@abc.or.jp" associated with the designated item of "Sender name" information are selected.

FIG. 7(c) shows an example of the screen (received message selection screen) displaying in the form of a list all received message titles etc. whose sender address information is the address information associated with the designated item of "Sender name" information in the case where the selected and designated item of "Sender name" information is "YAMADA, Taro" appearing on the sender selection by date menu screen shown in FIG. 7(b). The received message selection screen shown in FIG. 7(c) displays multiple lines, one for every received message considered to have been received from the person associated with the designated item of "Sender name" information "YAMADA, Taro," each composed of a set including the date the message was received (01/03 etc.) and the title (Made up your mind? etc.). The messages are listed in the received message selection screen in, for instance, order of In Date starting from the most recent.

As explained in the foregoing, the mobile telephone of this embodiment automatically creates a sender table sorted by date and a sender selection by date menu, and offers the same various advantageous effects as the mobile telephone of the first embodiment explained earlier. It therefore makes the information identifying the senders of received messages easy for the user to utilize.

In the mobile telephone of this embodiment, since the information identifying the senders of received messages displayed on the sender selection by date menu screen gives priority to the senders whose messages were most recently received, the user can easily find desired sender identification information. The utility of the sender identification information is therefore enhanced.

In this embodiment, the registered name information and address information entered in the "Sender name" column of the sender table sorted by date shown in FIG. 5 correspond to the sender identification information of the present invention.

In this embodiment, the "Sender name" and other information displayed on the sender selection by date menu screen shown in FIG. 7(b), for example, corresponds to the menu information including information identifying received message senders of the present invention.

In this embodiment, the function of the control unit 8 that creates the menu information menu listing the information identifying senders of received messages giving priority to the senders whose messages were most recently received constitutes the menu information creating means of the present invention.

A mobile telephone that is a third embodiment of the present invention will now be explained with reference to the drawings.

The configuration and operation of the mobile telephone of the third embodiment are similar to the configuration and operation of the mobile telephone of the first embodiment except for the point that the mobile telephone of the third embodiment lists information identifying the senders of received messages giving priority to the senders from whom the most messages were received. In the following, therefore, only the points of difference in configuration and operation from the first embodiment will be explained in detail. For convenience of explanation, reference numerals identical to the reference numerals 1 to 8 assigned to the constituent elements of the mobile telephone shown in FIG. 1 will also be used to designate the corresponding constituent elements of the mobile telephone according to this second embodiment.

The mobile telephone of this embodiment acquires sender address information from received mail messages and effects processing for entering the addresses in a sender table sorted by mail volume starting with the sender from whom the most messages were received.

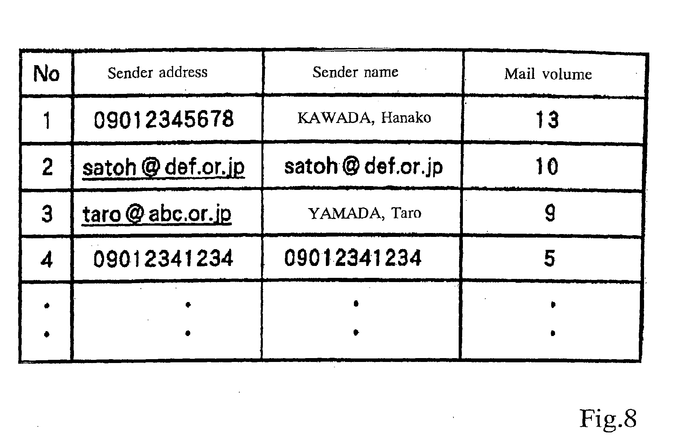

FIG. 8 shows an example of a sender table sorted by mail volume created by the mobile telephone of this embodiment. Each of the numbers (No) 1, 2, 3 ... in the sender table sorted by mail volume is associated with address information entered in a "Sender address" column, registered name information or address information entered in a "Sender name" column, and information indicating the number of received messages entered in a "Mail volume" column. In the illustrated example, specific address information such as "09012345678" or "satoh@def.or.jp" is entered in the "Sender address" column and, in association therewith, registered name information such as "KAWADA, Hanako" or address information such as "satoh@def.or.jp" is entered in the "Sender name" column, and mail volume information such as "13" or "10" is entered in the "Mail volume" column.

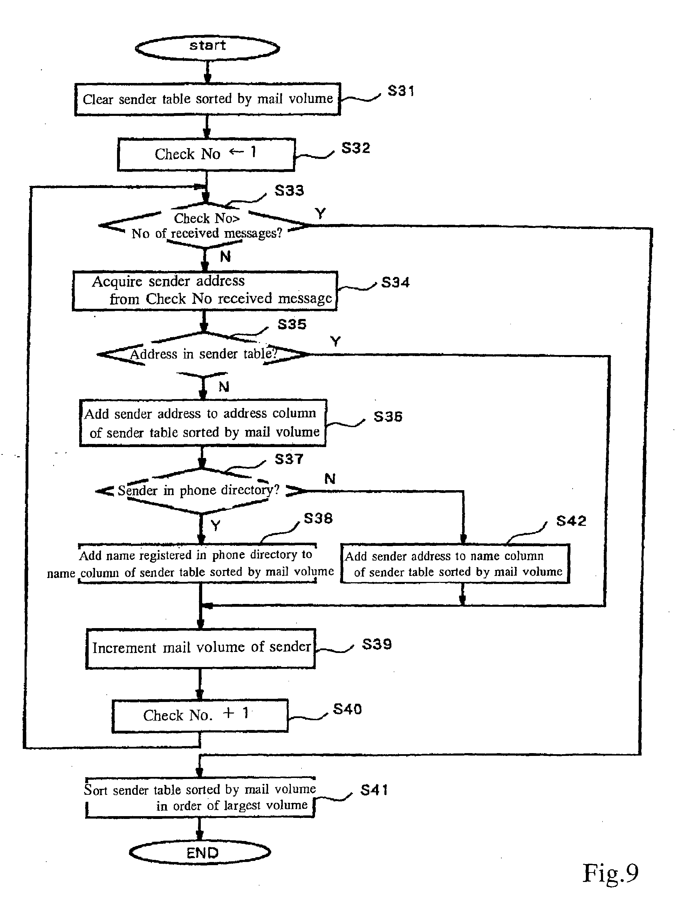

FIG. 9 is a flowchart showing an example of the sequence of processing steps used for acquiring sender address information from received messages and entering the information in the sender table sorted by mail volume in the order of mail volume starting with the sender from whom the most messages were received. An example of the processing procedure will now be explained with reference to this drawing. The following explanation is made on the assumption that all mail messages received by the mobile telephone have been stored in the memory unit 3 and that each received message has been assigned a number such as 1, 2, 3....

In the mobile telephone, at the start of the processing, the sender table sorted by mail volume is cleared (step S31), the Check No is set to an initial value of 1 (step S32) and, until the Check No becomes larger than the total number of messages (step S33), sender identification information entry processing is executed as set out below (step 33 - step S40).

The sender identification information entry processing starts with extraction from the received message associated with the Check No of information regarding the address of the person who sent the received message (step S34). It is then checked whether the extracted address information has already been recorded and is present in the sender table sorted by mail volume (step S35).

When it is found that the extracted address information is already present in the sender table sorted by mail volume, the number of received messages entered in the "Mail volume" column of the sender table sorted by mail volume in association with the address information stored in the "Sender address" column of the sender table sorted by mail volume is incremented by 1 (step S39). The Check No is then incremented by 1 (step S40) and sender identification information entry processing is conducted with respect to the incremented Check No (step S33 - step S40).

On the other hand, when it is found that the extracted address information is not present in the sender table sorted by mail volume, the address information is recorded in (added to) the "Sender address" column of the sender table sorted by mail volume (step S36). It is then checked whether the address information is recorded and present in the phone directory (step 37).

When it is found that the extracted address information is present in the phone directory, information regarding the name (registered name) recorded in the phone directory in association with the address information is read and the registered name information is entered in the "Sender name" column of the sender table sorted by mail volume in association with the address information in the "Sender address" column of the sender table sorted by mail volume (step S38).

On the other hand, when it is found that the extracted address information is not present in the phone directory, the address information is entered in the "Sender name" column of the sender table in association with the address information in the "Sender address" column of the sender table (step S42).

Next, the number of received messages entered in the "Mail volume" column of the sender table sorted by mail volume in association with the extracted address information stored in the "Sender address" column of the sender table sorted by mail volume is incremented by 1 (step S39).

When the processing for recording sender identification information in the sender table has been completed (step S39), the Check No is incremented by 1 (step S40) and sender identification information entry processing is conducted with respect to the incremented Check No (step S33 - step S40). The sender identification information entry processing is thus performed as many times as the total number of received messages.

When the sender identification information entry processing has been completed for all received messages, the sets of information each composed of a "Sender address," a ""Sender name" and "Mail volume" entered in the sender table sorted by mail volume are resorted in the order of the mail volume stored in the "Mail volume" column starting from the sender who sent the most messages (step S41). In this embodiment, therefore, the mail volume numbers are stored starting with the sender from whom the most messages were received in the order of smaller to larger number (No) 1, 2, 3 ... in the sender table sorted by mail volume. When two or more mail volume numbers are the same, they can be listed in any desired order or be listed according to a separately established standard.

In addition, the mobile telephone of this embodiment is configured so that if, at a time when received message titles and the like are displayed on the screen of the display unit 5, the user manipulates the operation unit 4 to perform a prescribed operation for displaying "Sender selection by mail volume menu" information, the control unit 8 creates a sender table sorted by mail volume and displays information derived from the created sender table sorted by mail volume on the display unit 5 as "Sender selection by mail volume menu" information.

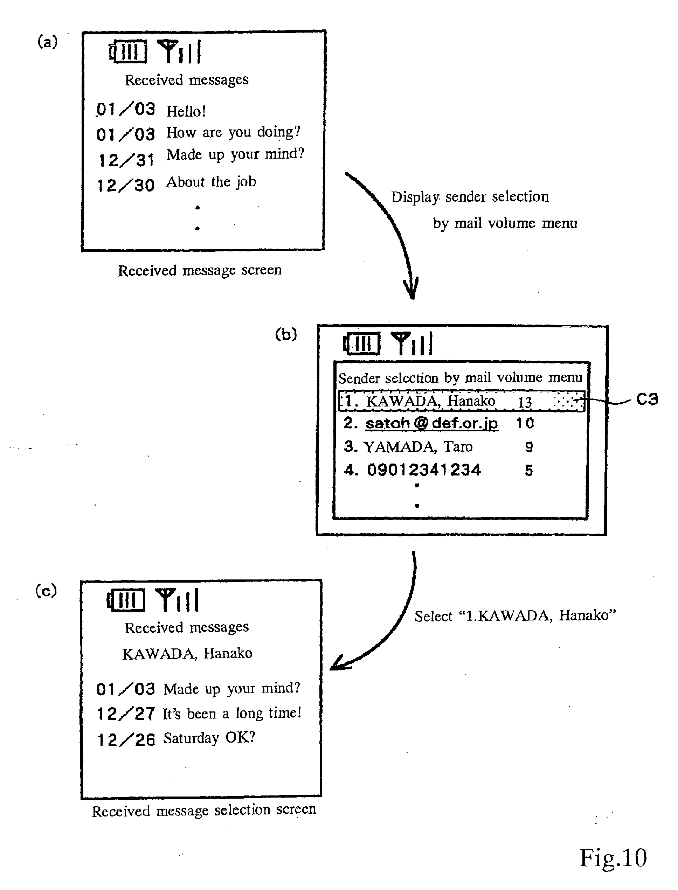

An example of the processing and the like for displaying the "Sender selection by mail volume menu" information is shown in FIG. 10.

At (a) in the drawing is shown an example of a screen displayed to show received messages in order of date starting from the most recent (received message screen). The screen displays multiple lines, one for every received message, each composed of a set including the date the message was received (01/03 etc.) and the title (Hello etc.).

At a time when a received message screen is being displayed, if the user performs a prescribed operation for displaying "Sender selection by mail volume menu" information, the control unit 8 executes the processing shown in FIG. 9 to create a sender table sorted by mail volume like that shown in FIG. 8 and displays on the screen of the display unit 5 a list composed of sets of information entered in the "Sender name" column and information entered in the "Mail volume" column of the created sender table sorted by mail volume.

An example of a screen displaying such sets of "Sender name" information and "Mail volume" information in the form of "Sender selection by mail volume menu" information (a sender selection by mail volume menu screen) is shown at (b) in FIG. 10. This screen displays, for example, multiple sets of "Sender name" information stored in the "Sender name" column ("KAWADA, Hanako" "satoh@def.or.jp" etc.) and "Mail volume" information ("10," 13" etc.) in association with the numbers thereof (1, 2, 3 ...) of the sender table sorted by date shown in FIG. 8 arranged in order of "Mail volume" starting with the sender who sent the most messages.

The sender selection by mail volume menu screen shown at FIG. 10(b) also displays a cursor C3 for selecting, for instance, a single item of "Sender name" information from among the multiple items of "Sender name" information displayed. The cursor C3 moves in response to a prescribed operation for moving it performed by the user through the operation unit 4. The user can then designate (confirm selection of) the item of "Sender name" information selected by the cursor C3 by a prescribed designation operation input through the operation unit 4. In other words, the user can manipulate the operation unit 4 to select a desired item of "Sender name" information with the cursor C3 and can then manipulate the operation unit 4 to designate the selected "Sender name" information. In the example shown at (b) in the drawing, "1. KAWADA, Hanako" is selected by the cursor C3.

In the mobile telephone of this embodiment, when an item of "Sender name" information is designated in the Sender selection by mail volume menu screen shown at (b) in the drawing, the control unit 8 conducts processing for displaying the title and the like of received messages associated with the designated item of "Sender name" information in the form of a list on the screen of the display unit 5.

The received messages associated with the designated item of "Sender name" information that are selected are those received messages among all received messages whose sender address information is the same as the address information entered in the "Sender address" column of the sender table sorted by date in association with the number of the designated item of "Sender name" information. As a concrete example, when the item of "Sender name" information "KAWADA, Hanako" is designated, all received messages whose sender address information is the address information "09012345678" associated with the designated item of "Sender name" information are selected.

FIG. 10(c) shows an example of the screen (received message selection screen) displaying in the form of a list all received message titles etc. whose sender address information is the address information associated with the designated item of "Sender name" information in the case where the selected and designated item of "Sender name" information is "KAWADA, Hanako" appearing on the sender selection by mail volume menu screen shown in FIG. 10(b). The received message selection screen shown in FIG. 10(c) displays multiple lines, one for every received message considered to have been received from the person associated with the designated item of "Sender name" information "KAWADA, Hanako," each composed of a set including the date the message was received (01/03 etc.) and the title (Made up your mind? etc.). The messages are listed in the received message selection screen in, for instance, order of In Date starting from the most recent.

As explained in the foregoing, the mobile telephone of this embodiment automatically creates a sender table sorted by mail volume and a sender selection by mail volume menu, and offers the same various advantageous effects as the mobile telephone of the first embodiment explained earlier. It therefore makes the information identifying the senders of received messages easy for the user to utilize.

In the mobile telephone of this embodiment, since the information identifying the senders of received messages displayed on the sender selection by mail volume menu screen gives priority to the senders from whom the most messages were received, the user can easily find desired sender identification information. The utility of the sender identification information is therefore enhanced.

In this embodiment, the registered name information and address information entered in the "Sender name" column of the sender table sorted by mail volume shown in FIG. 8 correspond to the sender identification information of the present invention.

In this embodiment, the "Sender name" and other information displayed on the sender selection by mail volume menu screen shown in FIG. 10(b), for example, corresponds to the menu information including information identifying received message senders of the present invention.

In this embodiment, the function of the control unit 8 that creates the menu information menu listing the information identifying senders of received messages giving priority to the senders from whom the most messages were received constitutes the menu information creating means of the present invention.

The configuration of the message communication device according to this invention is not limited to that set out in the foregoing and any of various other configurations can be adopted instead.

In addition, the field of application of the present invention is not limited to that discussed in the foregoing and application in various other fields is also possible. For example, the message communication device according to the present invention can be applied not only to mobile telephones of a mobile phone system or handy phone system but also to Personal Digital Assistants (PDAs), personal computers and any of various other communication devices.

In addition, the various types of processing performed in the message communication device according to this invention may be constituted by being implemented in hardware resources equipped with a processor and memory and the like, for example, being controlled by means of the processor executing a control program stored in ROM. Further, the various functional means for executing this processing may also be constituted as independent physical circuits.

In addition, the present invention may also be understood as the aforesaid program per se or as a floppy disk, CD-ROM or other computer-readable recording media in which the control program is stored, so that the processing according to the present invention can be implemented by loading said control program from the recording medium into a computer and executing the program by a processor.

As explained in the foregoing, since the message communication device according to the present invention creates menu information including information identifying received message senders, the information identifying received message senders is easy for the user to utilize.

Since the message communication device according to the present invention creates menu information listing the sender identification information in a prescribed order, it offers enhanced ease-of-use because it permits the user to readily find required sender information.

Since the message communication device according the present invention displays the created menu information for the user to view, accepts user designation of sender identification information among the displayed menu information, and executes prescribed processing related to the accepted sender identification information, it offers the user enhanced ease-of-use when, for example, subjecting the designated sender identification information to various kinds of processing.

## Claims

1. A message communication device that receives messages comprising:
menu information creating means for creating menu information including received message sender identification information.

2. A message communication device according to claim 1, wherein the menu information creating means creates menu information listing the sender identification information in a prescribed order.

3. A message communication device according to claim 2, wherein the menu information creating means creates menu information listing sender identification information giving priority to senders whose messages were most recently received.

4. A message communication device according to claim 2, wherein the menu information creating means creates menu information listing sender identification information giving priority to senders from whom the most messages were received.

5. A message communication device according to claim 1, 2, 3 or 4, further comprising:
display means for displaying the menu information created by the menu information creating means for the user to view;
accept means for accepting user designation of sender identification information among the displayed menu information; and
processing means for executing prescribed processing related to the accepted sender identification information.

6. A message communication device according to any of claims 1 to 5, wherein the message communication device is a mobile telephone and the messages are mail messages.

7. A message communication device according to claim 6, further comprising a phone directory function for recording name information in association with address information and wherein the menu information creating means extracts from a received message address information of the person who sent the received message, uses a name registered in the phone directory in association with the extracted address information as the sender identification information when the extracted address information is registered in the phone directory, and uses the address information as the sender identification information when the extracted address information is not registered in the phone directory.
